# EUROPÄISCHE PATENTSCHRIFT

(11) **EP 0 551 345 B1**
(45) Veröffentlichungstag und Bekanntmachung des Hinweises auf die Patenterteilung: **31.08.1994**
(21) Anmeldenummer: 91917382.3
(22) Anmeldetag: 04.10.1991
(51) Int. Cl.: B60L 5/20

(54) **FASSUNG EINES STROMABNEHMERS FÜR EINEN AN EINEM FAHRDRAHT ANLIEGENDEN KOHLESCHLEIFKÖRPER FÜR ELEKTRISCH BETRIEBENE FAHRZEUGE**
CURRENT COLLECTOR HOLDER FOR A CARBON SHOE CONTACTING A CATENARY FOR ELECTRICALLY DRIVEN VEHICLES
MONTURE DE TROLLEY POUR UN FROTTEUR A CHARBON CONTIGU A UN FIL AERIEN, POUR VEHICULES A TRACTION ELECTRIQUE

(30) Priorität: 04.10.1990 DE 4031686; 09.11.1990 DE 4036137
(43) Veröffentlichungstag der Anmeldung: 21.07.1993
(73) Patentinhaber: DEUTZER, Manfred, D-12679 Berlin (DE)
(72) Erfinder: DEUTZER, Manfred, D-12679 Berlin (DE)
(74) Vertreter: Jander, Dieter, Dipl.-Ing.
(86) Internationale Anmeldenummer: DE9100794
(87) Internationale Veröffentlichungsnummer: WO9205975

(56) Entgegenhaltungen:
- DE-A- 2 461 311
- DE-B- 1 011 457

## Beschreibung

Die Erfindung bezieht sich auf eine Fassung eines Stromabnehmers für einen an einem Fahrdraht anliegenden Kohleschleifkörper für elektrisch betriebene Fahrzeuge, welche Fassung zwei erste Stege aufweist, die den Fußbereich des Schleifkörpers erfassen, und zwei zweite Stege aufweist, die unterhalb des Schleifkörpers angeordnet von diesem wegragen, wobei ein gesondertes Federsystem vorgesehen ist, welches die zweiten Stege relativ zueinander und damit die ersten Stege gegen den Fußbereich des Schleifkörpers drückt.

Die Fassung ist in der Regel über seitliche Elemente, sogenannte Hörner, mit dem Stromabnehmer verbunden.

Bei einer bekannten Fassung dieser Art (DD-PS 159 163) wird das Federsystem durch mehrere Spiralfedern gebildet, die an diskreten Punkten der zweiten Stege, quer zur Schleifkörperlängsrichtung orientiert, auf die zweiten Stege wirken. Diese Ausbildung ist relativ kompliziert, und ihre Masse ist sehr hoch. Hinzu kommt, daß die Kräfte nicht kontinuierlich über die gesamte Länge der zweiten Stege wirken, wodurch Spannungen im Kohleschleifkörper verursacht werden. Gleichzeitig ist der Kontaktspannungsabfall zwischen dem Kohleschleifkörper und der Fassung relativ hoch.

Der Erfindung liegt die Aufgabe zugrunde, die eingangs erwähnte Fassung derart auszubilden, daß sie einfacher als die bekannte ist und daß die Federkräfte kontinuierlich über die gesamte Länge des Schleifkörpers wirken.

Diese Ausbildung wird erfindungsgemäß dadurch gelöst, daß als Federsystem eine in Schleifkörperlängsrichtung unverändert sich erstreckende Feder vorgesehen ist, die mit Längsbereichen den zweiten Stegen anliegt und auf diese Weise ihre in Schleifkörperquerrichtung wirkende Federkraft auf die zweiten Stege überträgt.

Diese Ausbildung zeichnet sich durch Einfachheit aus. Das wirkt sich günstig auf die Herstellung aus und ermöglicht in einfacher Art und Weise den Einsatz verschlissener Kohleschleifkörper. Hinzu kommt, daß die Feder kontinuierlich über die gesamte Länge der zweiten Stege wirkt. Das führt dazu, daß man einfacher als im bekannten Fall die Kohleschleifkörper mit in Längsrichtung gleich bleibenden Kräften halten kann, was wegen der gewissen Zerbrechlichkeit des Kohleschleifkörpers besser ist als das Halten derselben mit in Längsrichtung unterschiedlich wirkenden Kräften. Hinzu kommt, daß dann der elektrische Übergangswiderstand vom Kohleschleifkörper zur Fassung über den gesamten Schleifkörper konstant und kleiner ist.

Es sei erwähnt, daß es auch schon bekannt ist, mit in Längsrichtung kontinuierlich wirkenden Kräften Kohleschleifkörper zu halten. So ist es bekannt (AT-PS 209 376), zwischen den ersten Stegen und dem Kohleschleifkörper Gummistreifen vorzusehen. Die durch die Gummistreifen getrennten Flächen tragen nicht zur elektrischen Kontaktierung bei. Die Gummistreifen sind starken Alterungserscheinungen unterworfen. Hinzu kommt, daß man mit diesen Gummistreifen nur begrenzte Kräfte übertragen bzw. erzeugen kann. Weiterhin ist es bekannt (AT-PS 342 117 und DE-OS 21 38 459), die Fassung selber in gewissen Bereichen federnd auszubilden, um die Haltekräfte für den Kohleschleifkörper zu erzeugen. Deswegen kann auf diese Weise nicht allen Gegebenheiten optimal Rechnung getragen werden wie bei der erfindungsgemäßen Lösung, bei der Fassung und Federsystem getrennt voneinander sind.

Eine Weiterentwicklung der Erfindung besteht darin, daß die Feder in Körperquerrichtung eine offene, einseitig gekrümmte Figur mit einander gegenüberliegenden Rändern bildet, die die zweiten Stege umgreift und diese gegeneinander drückt. Bei quer zum Fahrdraht gebogenen Schleifkörpern erhält die Feder zusätzlich den Radius der Fassung. Es ist aber auch möglich, die Feder mit Querschlitzen zu versehen, die kurz vor den Rändern enden.

An den Enden der Feder können sich Bohrungen befinden, in die Haken eingesetzt werden können, mit denen die Federn aus dem Schleifkörper herausgezogen werden können.

Eine andere Möglichkeit besteht darin, daß die Feder eine in Körperquerrichtung leicht gekrümmte Blattfeder ist, die zwischen den zweiten Stegen angeordnet ist und diese auseinander drückt.

Weiterhin ist es möglich, daß die Feder in Körperquerrichtung eine geschlossene, einseitig gekrümmte Figur bildet, die zwischen den zweiten Stegen angeordnet ist und diese auseinander drückt.

Diese so geartete Feder kann innen hohl sein, sie kann aber auch innen voll sein und aus stark elastischem Material bestehen.

Ist die Feder hohl, dann könnte die Federwand elastisch ausgebildet sein, wobei sich in ihrem Innern Druckgas, insbesondere Druckluft, in gesteuerter Art und Weise befindet.

Natürlich ist es zweckmäßig, wenn die Federn gemäß den Ansprüchen 1 bis 7 aus Federstahl bestehen.

Weiterhin wird vorgeschlagen, daß die ersten Stege über eine Wand miteinander verbunden sind, die unterhalb der zweiten Stege angeordnet ist. Die Fassung ohne Feder besteht dann aus einem einzigen Stück. Sind die ersten Stege nicht mit einer Wand verbunden, dann besteht die Fassung ohne Feder aus zwei Hälften.

Eine Alternative zu den über die gesamte Fassungslänge sich erstreckenden zweiten Stegen besteht darin, daß diese in Längsrichtung kurze Stücke sind, die abwechselnd nach rechts und nach links mit den ersten Stegen verbunden sind und ineinandergreifen. In diesem Fall besteht die Fassung ohne Feder aus zwei Teilen. Werden die ersten Stege mit einer Wand unterhalb der zweiten Stege verbunden, dann besteht die Fassung aus einem Stück.

Sodann ist es zweckmäßig, wenn die zweiten Stege an ihren freien Enden seitlich abragende Schultern aufweisen, hinter die die Feder greift.

Weiterhin wird vorgeschlagen, daß in Schleifkörperlängsrichtung die Feder aus mehreren mit oder ohne Abstand aneinandergrenzenden Stücken besteht. Diese Ausbildung ist besonders interessant, wenn der Schleifkörper quer zum Fahrdraht gebogen ist.

Eine weitere Ausbildung der Erfindung besteht darin, daß sich an der Fassung ein Fühlglied befindet, das die mechanischen Schwingungen des Schleifkörpers aufnimmt. Dieses Fühlglied ist mit einem Anzeigegerät verbunden. Auf diese Weise ist es möglich, Störungen der verschiedensten Art, z.B. Defekte des Kohleschleifkörpers, wie Abplatzungen im Bereich der Schleiffläche des Kohlekörpers oder Schleifkörperbrüche sowie Fehler der Fahrleitung zu erfassen. Ist alles in Ordnung, zeigt das Anzeigegerät ein bestimmtes mechanisches Verhalten des Fühlgliedes und damit des Schleifkörpers an. Fehler der genannten Art führen zu Abweichungen von dieser Anzeige.

Sind die ersten Stege über eine Wand miteinander verbunden, die unterhalb der zweiten Stege angeordnet ist, dann ist es zweckmäßig, das Fühlglied in den Raum oberhalb dieser Wand anzuordnen.

Ferner ist es zweckmäßig, zwei Federn vorzusehen, zwischen denen sich das Fühlglied befindet.

Weitere Einzelheiten der Erfindung ergeben sich aus den Zeichnungen. Darin zeigen:
- Fig. 1: einen Schnitt durch eine erste Ausführungsform der Erfindung gemäß der Linie I-I der Fig. 2,
- Fig. 2: eine Unteransicht der ersten Ausführungsform ohne Feder,
- Fig. 3: einen Schnitt durch eine zweite Ausführungsform entsprechend der Figur 1,
- Fig. 4: einen Schnitt durch eine dritte Ausführungsform der Erfindung entsprechend der Fig. 1,
- Fig. 5: eine perspektivische Ansicht einer Feder,
- Fig. 6: eine weitere Ausführungsform vor dem Zusammenbau und Fig. 7 nach dem Zusammenbau und

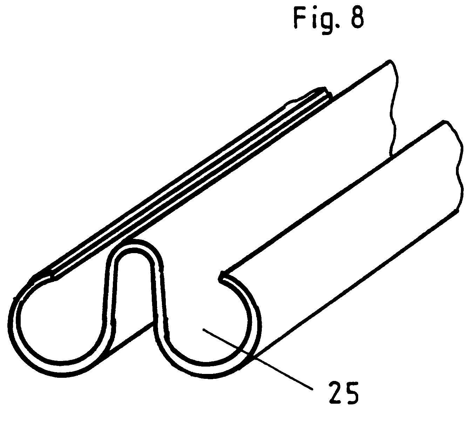

- Fig. 8: eine weitere Ausführungsform.

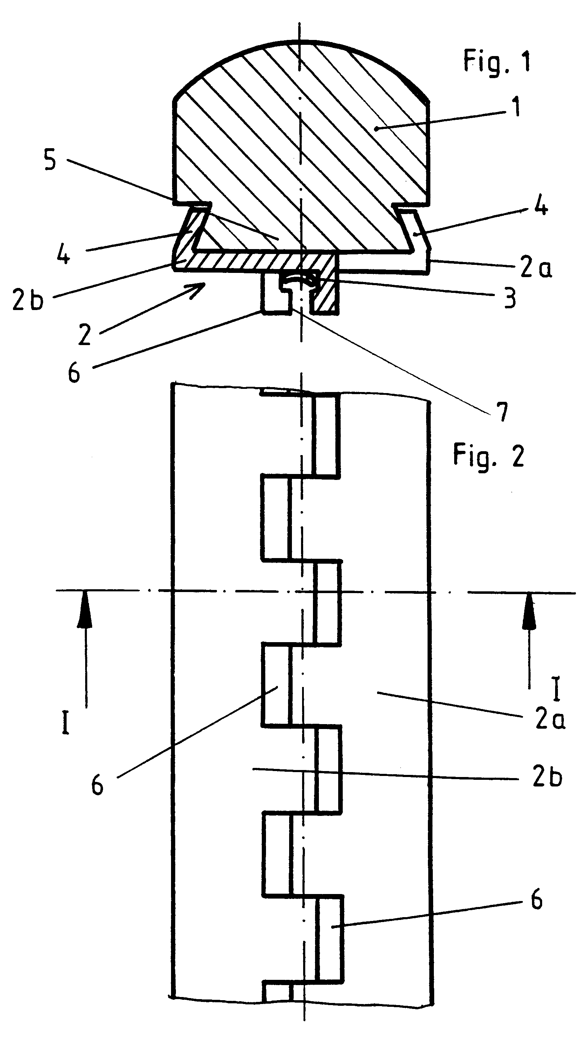

In den Figuren 1 und 2 ist mit 1 ein Kohleschleifkörper, mit 2 eine Fassung für diesen, bestehend aus den Teilen 2a und 2b, und mit 3 eine Blattfeder bezeichnet. Die Fassung weist erste Stege 4 auf, die einen Fußbereich 5 des Kohleschleifkörpers erfassen. Ferner weist die Fassung zwei Stege 6 auf, die an ihren freien Enden nach innen ragende Schultern 7 besitzen. Diese dienen als Halt für die Feder 3. Letztere ist in Schleifkörperquerrichtung leicht gebogen und übt auf die Stege 6 einen Druck aus, der dazu führt, daß die Stege 4 fest den Fußbereich 5 des Kohleschleifkörpers 1 umfassen. Wird die Feder 3 in bezug auf Figur 1 senkrecht zur Zeichenebene herausgezogen, dann lösen sich u.a. die beiden Teile 2a und 2b voneinander.

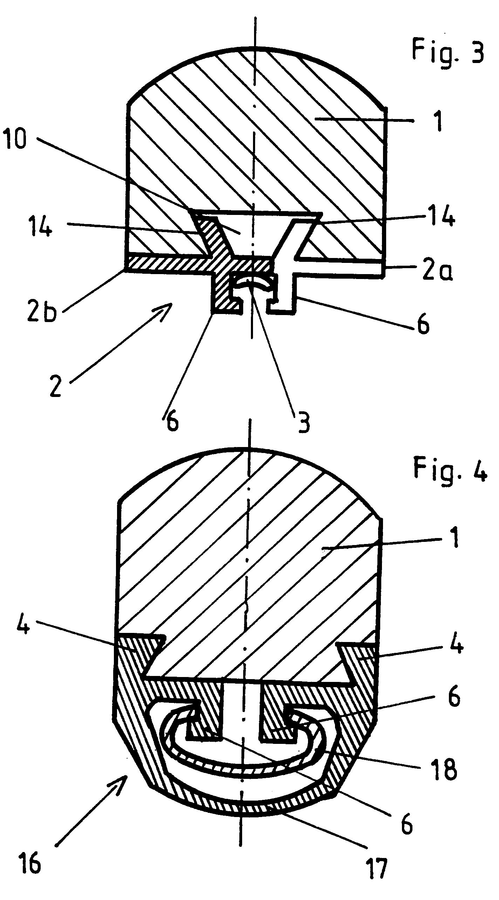

Die Ausführungsform der Figur 3 unterscheidet sich im wesentlichen von der Ausführungsform der Figuren 1 und 2 dadurch, daß der Kohleschleifkörper 1 im mittleren Bereich einen sich nach innen erweiternden Ausschnitt 10 aufweist, in den erste Stege 14 eingreifen. Im übrigen entspricht diese Ausführungsform der Ausführungsform der Figuren 1 und 2.

Bei der Ausführungsform der Figur 4 besteht die Fassung 16 aus einem Teil. Sie weist erste Stege 4 und zweite Stege 6 auf. Im übrigen ist eine Wand 17 vorgesehen, die die Stege 4 miteinander verbindet, unterhalb der Stege 6 verläuft und einen Raum bildet, in dem sich die Stege 6 und eine Feder 18 befinden. Diese ist quer zur Schleifkörperlängsrichtung gebogen und drückt die zweiten Stege 6 gegeneinander. Auf diese Weise werden auch die ersten Stege 4 gegeneinander gedrückt. Sie halten insofern den Kohleschleifkörper 1 fest.

In dem Raum oberhalb der Wand 17 kann sich ein Fühlglied (nicht dargestellt) befinden, welches das mechanische Verhalten des Schleifkörpers (Schwingungen, Stöße u.dgl.) erfaßt. Auf diese Weise ist es möglich, Verschiedenes zu überprüfen: Bei normalem Betrieb wird die Fassung eine bestimmte Schwingung ausführen. Von dieser Schwingung wird abgewichen, wenn beispielsweise der Kohleschleifkörper Defekte, wie Risse, Ausplatzungen oder Brüche aufweist. Es können auch Fehler an der Oberleitung und in gewisser Weise Probleme im Gleisbett nachgewiesen werden.

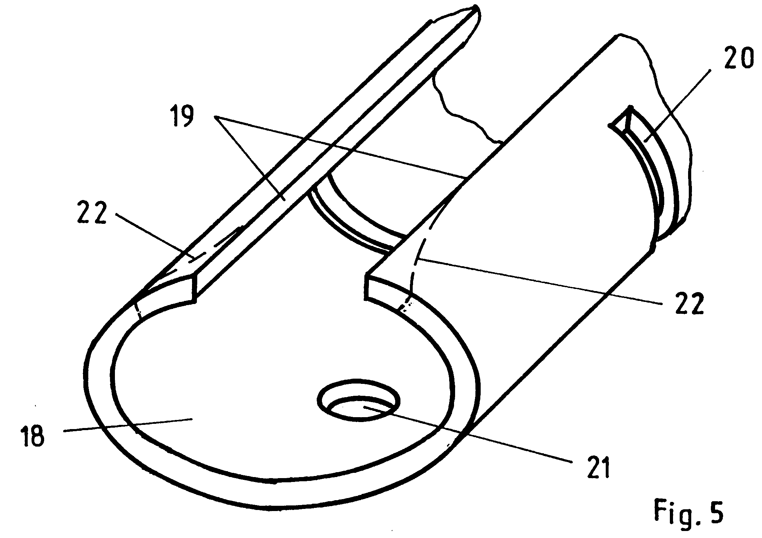

In der Figur 5 ist eine gebogene Feder 18 mit gegenüberliegenden Rändern 19 dargestellt. Die Feder ist mit Querschlitzen 20 versehen. Am Ende der Feder 18 befindet sich eine Bohrung 21. In diese kann man mit einem Haken eingreifen und dann die Feder herausziehen. Die beiden gestrichelten Linien 22 deuten eine Alternative an: Zwecks leichterer Aufschiebung der Feder könnten die Ränder derart geformt sein.

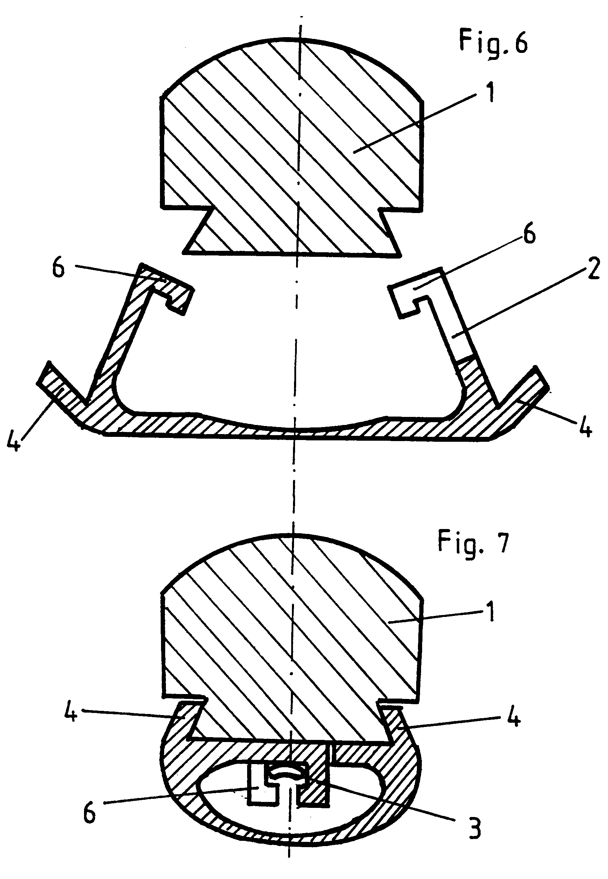

Die Figuren 6 und 7 zeigen eine Ausführungsform vor und nach dem Zusammenbau. Die Fassung besteht beispielsweise aus Aluminium.

Natürlich können die Teile, nämlich die Fassung und der Kohleschleifkörper, zusätzlich noch miteinander verklebt oder verlötet sein.

Eine weitere Ausführungsform der Erfindung besteht darin, daß die Feder, abgesehen von ihrem mittleren Bereich, in Körperquerrichtung eine offene, einseitig gekrümmte Figur mit einander gegenüberliegenden Rändern bildet, die die zweiten Stege umgreift und diese gegeneinander drückt, und daß die Feder in ihrem mittleren Bereich eine nach oben ragende Ausstülpung besitzt, die einen zwischen Kohleschleifkörper und Fassung eingelegten Kontaktstreifen gegen den Kohleschleifkörper drückt. Auf diese Weise wird erreicht, daß die Leitfähigkeit des Kohleschleifkörpers gewissermaßen von dem Kontaktstreifen übernommen wird, was die elektrische Belastbarkeit der Schleifleiste verbessert.

## Patentansprüche

1. Fassung eines Stromabnehmers für einen an einem Fahrdraht anliegenden Kohleschleifkörper (1) für elektrisch betriebene Fahrzeuge, welche Fassung (14) zwei erste Stege (4), die den Fußbereich des Schleifkörpers (1) erfassen, und zwei zweite Stege (6) aufweist, die unterhalb des Schleifkörpers (1) angeordnet von diesem wegragen, wobei ein gesondertes Federsystem (18) vorgesehen ist, welches die zweiten Stege (6) relativ zueinander und damit die ersten Stege (4) gegen den Fußbereich des Schleifkörpers (1) drückt, dadurch **gekennzeichnet**, daß als Federsystem eine in Schleifkörperlängsrichtung unverändert sich erstreckende Feder (3;18) vorgesehen ist, die mit Längsbereichen den zweiten Stegen (6) anliegt und auf diese Weise ihre in Körperquerrichtung wirkende Federkraft auf die zweiten Stege (6) überträgt.

2. Fassung nach Anspruch 1, dadurch gekennzeichnet, daß die Feder (18) in Körperquerrichtung eine offene, einseitig gekrümmte Figur mit einander gegenüberliegenden Rändern bildet, die die zweiten Stege (6) umgreift und diese gegeneinander drückt.

3. Fassung nach Anspruch 2, dadurch gekennzeichnet, daß die Feder (18) Querschlitze (20) aufweist, die kurz vor den Rändern enden.

4. Fassung nach Anspruch 1 - 3, dadurch gekennzeichnet, daß die Feder (18) an ihren Enden, vorzugsweise in ihrer Mitte, Bohrungen (21) besitzt.

5. Fassung nach Anspruch 1, dadurch gekennzeichnet, daß die Feder eine in Körperquerrichtung leicht gekrümmte Blattfeder (3) ist, die zwischen den zweiten Stegen (6) angeordnet ist und diese auseinander drückt.

6. Fassung nach Anspruch 1, dadurch gekennzeichnet, daß die Feder in Körperquerrichtung eine geschlossene, einseitig gekrümmte Figur bildet, die zwischen den zweiten Stegen angeordnet ist und diese auseinander drückt.

7. Fassung nach Anspruch 6, dadurch gekennzeichnet, daß die Feder hohl ist.

8. Fassung nach Anspruch 6, dadurch gekennzeichnet, daß die Feder innen voll ist und aus relativ stark elastischem Material besteht.

9. Fassung nach Anspruch 7, dadurch gekennzeichnet, daß die Federwand elastisch ist und daß sich in dieser gesteuert Druckgas, insbesondere Druckluft, befindet.

10. Fassung nach einem der Ansprüche 1 bis 7, dadurch gekennzeichnet, daß die Feder aus Federstahl besteht.

11. Fassung nach einem der Ansprüche 2 bis 10, dadurch gekennzeichnet, daß die ersten Stege (4) über eine Wand (17) miteinander verbunden sind, die unterhalb der zweiten Stege (6) angeordnet ist.

12. Fassung nach Anspruch 5 oder 6, dadurch gekennzeichnet, daß die zweiten Stege (6) in Längsrichtung kurze Stücke sind, die abwechselnd nach rechts und nach links mit den ersten Stegen (4;14) verbunden sind und ineinandergreifen.

13. Fassung nach einem der Ansprüche 1 bis 12, dadurch gekennzeichnet, daß die zweiten Stege (6) an ihren freien Enden seitlich abragende Schultern (7) aufweisen, hinter die die Feder (3;18) greift.

14. Fassung nach einem der Ansprüche 1 bis 13, dadurch gekennzeichnet, daß in Schleifkörperlängsrichtung die Feder aus mehreren mit oder ohne Abstand aneinandergrenzenden Stücken besteht.

15. Fassung nach einem der Ansprüche 1 bis 14, dadurch gekennzeichnet, daß sich an dieser (2;16) ein Fühlglied befindet, das die mechanischen Schwingungen der Fassung aufnimmt.

16. Fassung nach Anspruch 11 und 15, dadurch gekennzeichnet, daß sich das Fühlglied in dem Raum oberhalb der Wand (17) befindet.

17. Fassung nach Anspruch 16, dadurch gekennzeichnet, daß zwei Federn (18) vorgesehen sind, zwischen denen sich das Fühlglied befindet.

18. Fassung nach Anspruch 1, dadurch gekennzeichnet, daß die Feder, abgesehen von ihrem mittleren Bereich, in Körperquerrichtung eine offene, einseitig gekrümmte Figur mit einander gegenüberliegenden Rändern bildet, die die Stege (6) umgreift und diese gegeneinander drückt, und daß die Feder in ihrem mittleren Bereich eine nach oben ragende Ausstülpung (25) besitzt, die einen zwischen Kohleschleifkörper (1) und Fassung (16) eingelegten Kontaktstreifen gegen den Kohleschleifkörper (1) drückt (Fig. 8).

## Claims

1. A current collector holder for a carbon shoe (1), which bears against a contact wire, for electrically driven vehicles, which holder (14) has two first webs (4), which grip the foot region of the shoe (1), and two second webs (6), which project away from the shoe (1) and are arranged underneath it, a separate spring system (18) being provided which presses the second webs (6) relatively towards one another and hence pres1ses the first webs (4) against the foot region of the shoe (1), wherein a spring is provided as the spring system, which spring (3;18) extends unchanged in the longitudinal direction of the shoe, bears against the second webs (6) with longitudinal regions, and in this way transmits its spring force, which acts in the transverse direction of the shoe, to the second webs (6).

2. The holder as claimed in claim 1, wherein the spring (18) forms an open figure in the transverse direction of the shoe, which figure is curved on one side, has two mutually opposite edges, grips the second webs and presses them against one another.

3. The holder as claimed in claim 2, wherein the spring (18) has transverse slots (20) which end shortly in front of the edges.

4. The holder as claimed in claims 1 to 3, wherein the spring (18) has holes (21) at its ends, preferably in its center.

5. The holder as claimed in claim 1, wherein the spring is a leaf spring (3) which is slightly curved in the transverse direction of the shoe, is arranged between the second webs (6) and presses the latter apart.

6. The holder as claimed in claim 1, wherein the spring forms a closed figure, in the transverse direction of the shoe, which figure is curved on one side, is arranged between the second webs and presses the latter apart.

7. The holder as claimed in claim 6, wherein the spring is hollow.

8. The holder as claimed in claim 6, wherein the spring is solid internally and is composed of relatively strongly elastic material.

9. The holder as claimed in claim 7, wherein the spring wall is elastic, and wherein there is compressed gas, especially compressed air, in a controlled manner.

10. The holder as claimed in one of claims 1 to 7, wherein the spring is composed of spring steel.

11. The holder as claimed in one of claims 2 to 10, wherein the first webs (4) are connected to one another via a wall (17), which is arranged underneath the second webs (6).

12. The holder as claimed in claim 5 or 6, wherein the second webs (6) are short pieces in the longitudinal direction, which short pieces are connected to the first webs (4;14) on the right and left alternately and interlock.

13. The holder as claimed in one of claimes 1 to 12, wherein the second webs (6) have laterally projecting shoulders (7) at their free ends, behind which shoulders the spring (3;18) engages.

14. The holder as claimed in one of claims 1 to 13, wherein, in the longitudinal direction of the shoe, the spring comprises a plurality of pieces which are adjacent to one another, with or without a space.

15. The holder as claimed in one of claims 1 to 14, wherein a sensing element which records the mechanical oscillations of the holder is located thereon (2;16).

16. The holder as claimed in claims 11 and 15, wherein the sensing element is located in the space above the wall (17).

17. The holder as claimed in claim 16, wherein two springs (18) are provided, between which the sensing element is located.

18. The holder as claimed in claim 1, wherein, apart from its central region, the spring forms an open figure in the transverse direction of the shoe , which figure is curved on one side, has mutually opposite edges, grips the webs (6) and presses them against one another, and wherein, in its central region, the spring has an upwardly projecting buldge (25) which presses a contact strip which is inserted between the carbon shoe (1) and the holder (16) against the carbon shoe (1) (Fig. 8).

## Revendications

1. Monture de trolley pour frotteur en charbon (1) s'appliquant contre un fil aérien, pour véhicule à traction électrique, cette monture (14) comprenant deux premières ailes (4), qui entourent la zone de pied du frotteur (1), et deux secondes ailes (6) qui s'éloignent du frotteur (1) en étant disposées au-dessous de ce frotteur, tandis qu'il est prévu un système spécial (18) à fonction de ressort qui repousse les secondes ailes (6) l'une vis-à-vis de l'autre et, de ce fait, applique les premières ailes (4) contre la zone de pied du frotteur (1), caractérisée en ce qu'en tant que système à fonction de ressort, il est prévu un ressort (3 ; 18) qui s'étend de façon inchangée suivant la direction longitudinale du frotteur et prend appui par des zones longitudinales sur les secondes ailes (6) et qui, de cette manière, transmet à ces secondes ailes (6) sa force élastique qui s'exerce suivant la direction transversale du frotteur.

2. Monture selon la revendication 1, caractérisée en ce que, suivant la direction transversale du frotteur, le ressort (18) a une configuration ouverte qui est courbe d'un côté et comporte des bords se faisant face et qui entoure les secondes ailes (6) en pressant ces dernières l'une vers l'autre.

3. Monture selon la revendication 2, caractérisée en ce que le ressort (18) comporte des fentes transversales (20) qui s'interrompent à une courte distance des bords.

4. Monture selon l'une des revendications 1 à 3, caractérisée en ce que le ressort (18) comporte des trous (21) à ses extrémités, de préférence en son milieu.

5. Monture selon la revendication 1, caractérisée en ce que le ressort est constitué d'un ressort à lame (3) qui est légèrement courbe suivant la direction transversale du frotteur et qui est disposé entre les secondes ailes (6) et écarte ces dernières l'une de l'autre.

6. Monture selon la revendication 1, caractérisée en ce que, suivant la direction transversale du frotteur, le ressort a une configuration fermée qui est courbe d'un côté et en ce qu'il est disposé entre les secondes ailes en écartant ces dernières l'une de l'autre.

7. Monture selon la revendication 6, caractérisée en ce que le ressort est creux.

8. Monture selon la revendication 6, caractérisée en ce que le ressort est intérieurement plein et est en un matériau élastique d'une épaisseur relativement forte.

9. Monture selon la revendication 7, caractérisée en ce que la paroi du ressort est élastique et en ce qu'un gaz comprimé, notamment de l'air comprimé, soumis à une commande, est situé dans cette paroi.

10. Monture selon l'une des revendications 1 à 7, caractérisée en ce que le ressort est en acier à ressort.

11. Monture selon l'une des revendications 2 à 10, caractérisée en ce que les premières ailes (4) sont réunies entre elles par une âme (17) qui est disposée au-dessous des secondes ailes (6).

12. Monture selon l'une des revendications 5 et 6, caractérisée en ce que, suivant la direction longitudinale, les secondes ailes (6) sont constituées de courts tronçons qui sont reliés aux premières ailes (4 ; 14) alternativement vers la droite et vers la gauche et qui s'emboîtent les uns dans les autres.

13. Monture selon l'une des revendications 1 à 12, caractérisée en ce qu'à leurs extrémités libres, les secondes ailes (6) comportent des épaulements (7) qui font saillie transversalement et derrière lesquels le ressort (3 ; 18) s'accroche.

14. Monture selon l'une des revendications 1 à 13, caractérisée en ce que, suivant la direction longitudinale du frotteur, le ressort est constitué de plusieurs tronçons qui se succèdent avec un certain espacement ou sans espacement.

15. Monture selon l'une des revendications 1 à 14, caractérisée en ce que, sur cette monture (2 ; 16), il est disposé un palpeur qui capte les oscillations mécaniques de la monture.

16. Monture selon les revendications 11 et 15, caractérisée en ce que le palpeur est disposé dans l'espace situé au-dessus de l'âme (17).

17. Monture selon la revendication 16, caractérisée en ce qu'il est prévu deux ressorts (18) entre lesquels le palpeur est disposé.

18. Monture selon la revendication 1, caractérisée en ce qu'hormis dans sa zone centrale, le ressort forme suivant la direction transversale du frotteur une configuration ouverte qui est courbe d'un côté et comporte des bords se faisant face et qui entoure les ailes (6) en pressant ces dernières l'une vers l'autre et en ce que, dans sa zone centrale, le ressort présente une partie retroussée (25) qui fait saillie vers le haut et qui repousse contre le frotteur à charbon (1) une bande de contact qui est placée entre ce frotteur en charbon (1) et la monture (16).
